# EUROPEAN PATENT APPLICATION

(11) **EP 4 848 442 A1**
(43) Date of publication of application: **02.12.2026**
(21) Application number: 25760214.4
(22) Date of filing: 20.03.2025
(51) Int. Cl.: H01M 50/264, H01M 50/211, H01M 50/242, H01M 10/04, H01M 50/289, H01M 50/293, H01M 50/59

(54) **BATTERY DEVICE, ENERGY STORAGE DEVICE, ENERGY STORAGE SYSTEM, ELECTRIC DEVICE AND CHARGING NETWORK**

(71) Applicant: Contemporary Amperex Technology Co., Ltd., Ningde, Fujian 352100 (CN)
(72) Inventor: QIAN, Ou, Ningde, Fujian 352100 (CN); LI, Yao, Ningde, Fujian 352100 (CN); ZHENG, Linxin, Ningde, Fujian 352100 (CN); CAI, Jiajin, Ningde, Fujian 352100 (CN); JIANG, Shixin, Ningde, Fujian 352100 (CN)
(74) Representative: Gong, Jinping
(86) International application number: PCT/CN2025/083857
(87) International publication number: WO 2026/193841

(57) **Abstract**

A battery apparatus (100), an energy storage apparatus (1), an energy storage system (1000), an electric apparatus, and a charging network (2000) are disclosed. The battery apparatus (100) includes: a battery cell unit (31), where the battery cell unit (31) includes a housing (34) and a pouch battery cell (20), the housing (34) includes two first walls (342) arranged oppositely along a first direction and a second wall (343) located between the two first walls (342), the housing (34) has a first opening (344) formed at another end along a second direction, and the second direction is perpendicular to the first direction; a limiting member (32), where multiple battery cell units (31) are arranged along the first direction to form a unit group (30), the limiting member (32) is located on a side of the first walls (342) of at least some battery cell units (31) in the unit group (30) facing away from the first opening (344), and the limiting member (32) is configured to provide a constraining force along the first direction to the battery cell units (31).

## Description

### TECHNICAL FIELD

This application relates to the field of batteries, and specifically to, a battery apparatus, an energy storage apparatus, an energy storage system, an electric apparatus, and a charging network.

### BACKGROUND

Energy conservation and emission reduction are key to the sustainable development of the automotive industry. Electric vehicles, due to their advantages in energy conservation and environmental protection, have become an important component of the sustainable development of the automotive industry. For electric vehicles, battery technology is a significant factor in their development.

In related art, a battery apparatus may include multiple pouch batteries. A pouch battery is a battery encapsulated with a soft casing, and an aluminum-plastic film is typically used as a casing material, featuring light weight, thin profile, and high energy density. However, the pouch battery is prone to swelling due to gas generated during charging and discharging processes, leading to battery failure and safety hazards.

### SUMMARY

In view of the above issues, this application provides a battery apparatus, an energy storage apparatus, an energy storage system, an electric apparatus, and a charging network, capable of mitigating the issues of safety hazards caused by damage and electrolyte leakage at a sealing position of a tab of a pouch battery cell.

According to a first aspect, this application provides a battery apparatus. The battery apparatus includes:
a battery cell unit, where the battery cell unit includes a housing and a pouch battery cell, the housing is internally provided with an accommodating cavity, the pouch battery cell is disposed in the accommodating cavity, the housing includes two first walls arranged oppositely along a first direction and a second wall located between the two first walls, the second wall is located at one end of the housing along a second direction and connected to the two first walls, the housing has a first opening formed at another end along the second direction, and the second direction is perpendicular to the first direction; and
a limiting member, where multiple battery cell units are arranged along the first direction to form a unit group, the limiting member is located on a side of the second walls of at least some battery cell units in the unit group facing away from the first opening, and the limiting member is configured to provide a constraining force along the first direction to the battery cell units.

In the above embodiments, the limiting member is configured to provide the constraining force along the first direction to the battery cell units, reducing or preventing displacement of the battery cell units in the first direction to some extent, thereby reducing failure and safety risks of the pouch battery cells.

In some embodiments, the battery apparatus further includes a first structural member and a second structural member, where the first structural member and the second structural member are respectively located at two ends of the unit group along the first direction, and the limiting member is connected to the first structural member and the second structural member.

In the above embodiments, the first structural member and the second structural member are respectively located at the two ends of the unit group along the first direction, and the limiting member is connected to the first structural member and the second structural member. The limiting member can limit a relative position between the first structural member and the second structural member in the first direction, thereby limiting relative positions between multiple battery cell units of the unit group in the first direction, reducing displacement of the battery cell units in the first direction to some extent, and reducing failure and safety risks of the pouch battery cells.

In some embodiments, the first structural member and the second structural member are respectively a first beam and a second beam disposed at the two ends of the unit group along the first direction.

In the above embodiments, the first structural member and the second structural member are respectively the first beam and the second beam at the two ends of the unit group along the first direction. The limiting member can be connected to the first beam and the second beam, and the limiting member can limit a relative position between the first beam and the second beam in the first direction, thereby limiting the relative positions between the multiple battery cell units of the unit group in the first direction, reducing or preventing displacement of the battery cell units in the first direction to some extent, and reducing failure and safety risks of the pouch battery cells.

In some embodiments, the limiting member is connected to the second walls of the at least some battery cell units in the unit group.

In the above embodiments, the limiting member is connected to the second walls of the at least some battery cell units in the unit group, limiting relative positions between at least some housings in the first direction, further limiting relative positions between the battery cell units connected thereto in the first direction, thereby reducing or preventing displacement of the battery cell units in the first direction to some extent, and reducing failure and safety risks of the pouch battery cells.

In some embodiments, the limiting member is connected to the at least some battery cell units through an adhesive.

In the above embodiments, the limiting member is connected to the at least some battery cell units through the adhesive, reducing displacement of the battery cell units in the first direction to some extent, and simplifying a mounting process of the battery apparatus.

In some embodiments, the housing of the battery cell unit is provided with an adhesive region, where the limiting member and the battery cell unit are connected to each other through the adhesive in the adhesive region, the housing of the battery cell unit is provided with an insulating layer, and the insulating layer is provided with a window in the adhesive region to allow the adhesive to connect the limiting member and the housing of the battery cell unit through the window.

In the above embodiments, the insulating layer is provided with the window in the adhesive region to allow the adhesive to connect the limiting member and the housing of the battery cell unit through the window. Providing the insulating layer can reduce the risk of abnormal electrical conduction of the housing of the battery cell unit, and providing the window in the insulating layer in the adhesive region can make the connection between the housing and the limiting member more stable, making it less likely to tear the insulating layer due to a relative position between the limiting member and the housing during vibration.

In some embodiments, the limiting member is connected to the at least some battery cell units using an insulating adhesive.

In the above embodiments, the limiting member is connected to the at least some battery cell units using the insulating adhesive, reducing displacement of the battery cell units in the first direction to some extent, and reducing the risk of abnormal electrical conduction between different battery cell units or between battery cell units and other metal components within a battery.

In some embodiments, one battery cell unit includes multiple pouch battery cells accommodated in the housing.

In the above embodiments, one battery cell unit including multiple pouch battery cells accommodated in the housing can increase the energy density of the battery apparatus and overall performance of the battery apparatus.

In some embodiments, the battery apparatus further includes a case, where the case includes an inner bottom wall, an end of the first wall of the battery cell unit facing away from the second wall is provided with a first connecting portion, and the first connecting portion is connected to the inner bottom wall.

In the above embodiments, the end of the first wall of the battery cell unit facing away from the second wall is provided with the first connecting portion, and the first connecting portion is connected to the inner bottom wall, further reducing or preventing displacement of the battery cell unit within the case, thereby reducing failure and safety risks of the pouch battery cells.

In some embodiments, the first connecting portion is connected to the inner bottom wall through a coating adhesive.

In the above embodiments, the first connecting portion is connected to the inner bottom wall through the coating adhesive, reducing or preventing displacement of the battery cell unit within the case to some extent, and simplifying a mounting process of the battery cell unit.

In some embodiments, the first connecting portion is connected to the inner bottom wall through an insulating adhesive.

In the above embodiments, the first connecting portion is connected to the inner bottom wall through the insulating adhesive, reducing or preventing displacement of the battery cell unit within the case to some extent, and reducing the risk of abnormal electrical conduction between the housing of the battery cell unit and the inner bottom wall of the case.

In some embodiments, the case includes a heat exchange plate, where the inner bottom wall is a side surface of the heat exchange plate facing the battery cell unit, and the first connecting portion is connected to the inner bottom wall through a thermally conductive adhesive.

In the above embodiments, the heat exchange plate can quickly dissipate heat generated by the pouch battery cell or provide heat to the pouch battery cell, thereby enabling the pouch battery cell to operate within a suitable temperature range, and helping to improve the performance of the battery apparatus and reduce the risk of thermal runaway.

In some embodiments, the inner bottom wall includes a second connecting portion, and the first connecting portion is snap-fitted with the second connecting portion.

In the above embodiments, the inner bottom wall includes a second connecting portion, and the first connecting portion is snap-fitted with the second connecting portion to connect the battery cell unit to the inner bottom wall of the case, further reducing or preventing displacement of the battery cell unit within the case, thereby reducing failure and safety risks of the pouch battery cells.

In some embodiments, the battery cell unit further includes a positive electrode lead-out portion and a negative electrode lead-out portion located on the second wall, where when projected along the second direction toward the second wall, a projection of the limiting member is completely offset from a projection of the positive electrode lead-out portion and a projection of the negative electrode lead-out portion.

In the above embodiments, the positive electrode lead-out portion and the negative electrode lead-out portion are both located on the second wall and are completely offset from the projection of the limiting member along the second direction toward the second wall, allowing the three to share at least part of the space along the second direction outside the second wall, and making the battery arrangement more orderly and compact. Additionally, when projected along the second direction toward the second wall, the projection of the limiting member is completely offset from the projection of the positive electrode lead-out portion and the projection of the negative electrode lead-out portion, preventing physical contact or interference between the limiting member and the positive electrode lead-out portion or the negative electrode lead-out portion, thereby effectively improving the stability of the battery apparatus.

In some embodiments, a positive electrode connecting portion and a negative electrode connecting portion of the pouch battery cell are respectively located at two ends of the pouch battery cell along a third direction, and the third direction is perpendicular to both the first direction and the second direction; and
the battery cell unit further includes a positive electrode busbar and a negative electrode busbar, where the positive electrode busbar is connected to the positive electrode connecting portion and the positive electrode lead-out portion, and the negative electrode busbar is connected to the negative electrode connecting portion and the negative electrode lead-out portion.

In the above embodiments, the positive electrode connecting portion and the negative electrode connecting portion of the pouch battery cell can be disposed at the two ends of the pouch battery cell along the third direction and are led out and connected to the positive electrode connecting portion and the negative electrode connecting portion on the second wall of the battery cell unit using the positive electrode busbar and the negative electrode busbar, which is conducive to optimizing the internal space utilization of the battery cell unit and increasing the energy density of the battery cell unit.

In some embodiments, the battery cell unit includes two end surfaces along a third direction, and the third direction is perpendicular to both the first direction and the second direction; and
the battery cell unit includes a positive electrode lead-out portion and a negative electrode lead-out portion, where the positive electrode lead-out portion and the negative electrode lead-out portion are respectively located on the two end surfaces of the battery cell unit along the third direction.

In the above embodiments, the positive electrode lead-out portion and the negative electrode lead-out portion are respectively located on the two end surfaces of the battery cell unit along the third direction, resulting in a short distance between the positive electrode lead-out portion and the positive electrode connecting portion and a short distance between the negative electrode lead-out portion and the negative electrode connecting portion, and allowing for a simpler adapting structure for adapting the positive electrode lead-out portion to the positive electrode connecting portion and a simpler adapting structure for adapting the negative electrode lead-out portion to the negative electrode connecting portion.

In some embodiments, the housing is further provided with a pressure relief structure, where the pressure relief structure is located on the second wall, and when projected along the second direction toward the second wall, a projection of the limiting member is completely offset from a projection of the pressure relief structure.

In the above embodiments, when projected along the second direction toward the second wall, the projection of the limiting member is completely offset from the projection of the pressure relief structure, preventing physical contact or interference between the limiting member and the pressure relief structure, and reducing the probability of damage to the structure of the limiting member during actuation of the pressure relief structure, thereby effectively improving the stability of the battery apparatus.

In some embodiments, the battery apparatus includes a case, an upper cover, and a compressible member, where the upper cover covers the case, and the compressible member abuts against both the limiting member and the upper cover, so that the upper cover presses against the battery cell unit through the compressible member.

In the above embodiments, the compressible member abuts against both the limiting member and the upper cover, so that the upper cover presses against the battery cell unit through the compressible member, keeping the battery cell unit stable when subjected to external forces along the second direction, thereby reducing displacement of the battery cell unit in the second direction to some extent.

In some embodiments, the limiting member is made of a metal material, the housing is made of a metal material, and the limiting member is welded to the housing of the battery cell unit.

In the above embodiments, the limiting member is welded to the housing of the battery cell unit, allowing the limiting member to provide a greater constraining force to at least some battery cell units, further reducing displacement of the battery cell units in the first direction, thereby reducing failure and safety risks of the pouch battery cells. Additionally, welding is low in cost, quick in process, and easy to implement.

According to a second aspect, this application provides an energy storage apparatus including multiple battery apparatuses according to any of the above embodiments, where the battery apparatus is configured to store or provide electrical energy.

According to a third aspect, this application provides an energy storage system including a power converter system and the energy storage apparatus according to the above embodiments, where the power converter system is configured to be electrically connected to a power generation apparatus and the energy storage apparatus.

According to a fourth aspect, this application provides an electric apparatus including the battery apparatus, the energy storage apparatus, or the energy storage system according to the above embodiments, where the battery apparatus is configured to store or provide electrical energy.

According to a fifth aspect, this application provides a charging network including a charging pile and the energy storage apparatus or the energy storage system according to the above embodiments, where the energy storage apparatus is configured to provide electrical energy to the charging pile.

The foregoing description is merely an overview of the technical solutions of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

Persons of ordinary skill in the art will be clear about various other advantages and benefits by reading the detailed description of the preferred embodiments below. The accompanying drawings are merely intended to illustrate the preferred embodiments and are not intended to limit this application. In addition, in all the accompanying drawings, the same reference signs represent the same components. In the accompanying drawings:
FIG. 1 is a schematic structural diagram of a vehicle according to some embodiments of this application;
FIG. 2 is a schematic exploded view of a battery apparatus according to some embodiments of this application;
FIG. 3 is a schematic exploded view of a unit group according to some embodiments of this application;
FIG. 4 is a top view of a unit group according to some embodiments of this application;
FIG. 5 is a side view of a unit group according to some embodiments of this application;
FIG. 6 is a schematic structural diagram of a pouch battery cell according to some embodiments of this application;
FIG. 7 is a schematic diagram of modules of an energy storage system according to some embodiments of this application; and
FIG. 8 is a schematic diagram of modules of a charging network according to some embodiments of this application.

Reference signs in the specific embodiments are as follows:
vehicle 1000; energy storage system 2000; charging network 3000; energy storage apparatus 1; power converter system 2; power generation device 3; charging pile 4; connector 5;
battery apparatus 100; controller 200; motor 300;
case 10; upper cover 11; inner bottom wall 12; heat exchange plate 13;
pouch battery cell 20; positive electrode connecting portion 21; negative electrode connecting portion 22;
unit group 30; battery cell unit 31; limiting member 32; compressible member 33; housing 34; positive electrode lead-out portion 311; negative electrode lead-out portion 312; positive electrode busbar 313; negative electrode busbar 314; accommodating cavity 341; first wall 342; second wall 343; first opening 344; adhesive region 345; insulating layer 346; first connecting portion 347; pressure relief structure 348;
first structural member 40; and second structural member 50.

### DESCRIPTION OF EMBODIMENTS

The embodiments of the technical solutions of this application will be described in detail below with reference to the accompanying drawings. The following embodiments are merely intended to provide a clearer description of the technical solutions of this application and therefore are used as just examples which do not constitute any limitations on the protection scope of this application.

Unless otherwise defined, all technical and scientific terms used herein have the same meanings as commonly understood by persons skilled in the technical field of this application; the terms used herein are for the purpose of describing specific embodiments only and are not intended to limit this application; and the terms ""comprise", "include", "have", and any variations thereof in the specification, claims, and description of the drawings of this application are intended to cover non-exclusive inclusion.

In the description of the embodiments of this application, technical terms such as "first" and "second" are used only to distinguish different objects and should not be understood as indicating or implying relative importance or implicitly indicating the number, specific order, or primary-secondary relationship of the technical features indicated. In the description of the embodiments of this application, "multiple" means two or more, unless otherwise explicitly and specifically defined.

In this specification, reference to "embodiment" means that specific features, structures, or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the description of the embodiments of this application, the term "multiple" refers to two or more (including two), similarly, "multiple groups" refers to two or more groups (including two groups), and "multiple pieces" refers to two or more pieces (including two pieces).

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on the embodiments of this application.

In the description of the embodiments of this application, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. For persons skilled in the art, the specific meanings of the above terms in the embodiments of this application can be understood based on specific circumstances.

Unless otherwise stated, all the embodiments and optional embodiments of this application can be combined with each other to form new technical solutions.

Unless otherwise stated, all technical features and optional technical features of this application can be combined with each other to form new technical solutions.

Currently, from the perspective of market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

In electric vehicle applications, pouch battery cells have advantages over traditional hard-shell battery cells, such as light weight and high density. However, during the long-term cycling process of pouch battery cells, gas generated during charging and discharging causes expansion in the pouch battery cells, leading to migration of positions of active materials. With accumulated migration, electrode connecting portions of pouch battery cells are prone to breakage at connection positions, resulting in battery failure; and pouch battery cells are prone to short-circuiting with adjacent pouch battery cells connected to busbar components, thereby posing safety risks.

Specifically, the swelling process of pouch battery cells can be limited by a housing with specified strength and rigidity, thereby mitigating failure of pouch battery cells and safety issues due to migration of positions of active materials. A battery apparatus may include multiple battery cell units. One battery cell unit includes a housing and at least one pouch battery cell, where the at least one pouch battery cell is accommodated in an accommodating cavity of the housing.

The battery cell units undergo displacement due to the swelling of the pouch battery cells. With accumulated displacement, electrode lead-out portions of the battery cell units are prone to breakage at connection positions, resulting in battery failure; and battery cell units are prone to short-circuiting with adjacent battery cell units connected to busbar components, thereby posing safety risks.

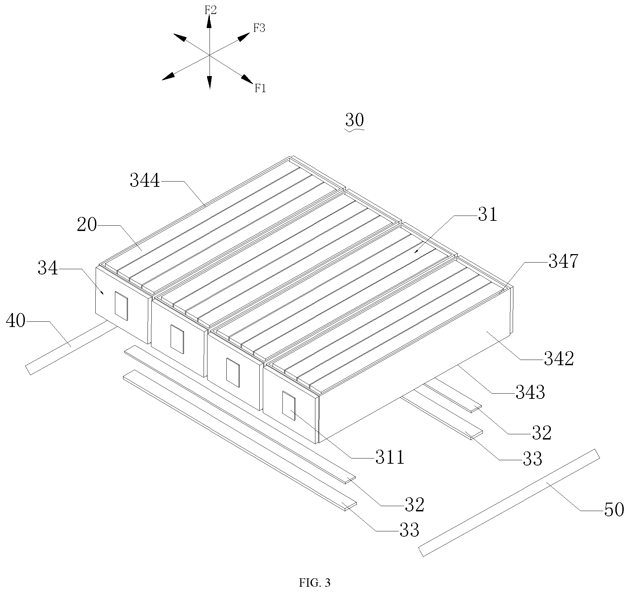

Based on the above considerations, referring to FIG. 3, to mitigate issues caused by the swelling of pouch battery cells 20, this application provides a limiting member 32. The limiting member 32 can fix relative positions between multiple housings 34 to provide a constraining force to multiple battery cell units 31, thereby limiting the swelling process of the pouch battery cells 20 accommodated in the housings 34, and reducing failure and safety risks of pouch battery cells 20 to some extent.

It should be noted that since the housing 34 has specified strength and rigidity, fixing the relative positions between the multiple housings 34 through the limiting member 32 to provide the constraining force to multiple battery cell units 31 can effectively limit the swelling process of the pouch battery cells 20, reducing the risk of deformation due to the constraining force to some extent.

A battery apparatus 100 (Battery Apparatus) of this application may include one or more unit groups 30 for providing voltage and capacity. A unit group may include multiple battery cell units 31, where the battery cell unit 31 may include a housing 34 and at least one pouch battery cell 20. Multiple pouch battery cells 20 may be connected in series, parallel, or series-parallel through busbar components. Being connected in series-parallel means a combination of series and parallel connections of the multiple pouch battery cells 20.

In some embodiments, a unit group 30 is typically formed by arranging multiple battery cell units 31.

As an example, the unit group 30 may be a battery module (Battery Module), where the battery module is formed by arranging and fixing multiple battery cell units 31 into an independent module. As an example, the battery module may be formed by bundling multiple battery cell units 31 with straps.

In some embodiments, the battery apparatus 100 may be a battery pack (battery Pack), where the battery pack includes a case 10, an upper cover 11, and one or more unit groups 30, the unit groups 30 are accommodated in the case 10, and the upper cover 11 covers the case 10.

As an example, the unit group 30 may be a battery module, and the unit group 30 may be accommodated in the case 10 by fixing the battery module in the case 10, and the upper cover 11 may cover the case 10.

As an example, the unit group 30 may alternatively be accommodated in the case 10 by directly fixing multiple battery cell units 31 in the case 10, and the upper cover 11 covers the case 10.

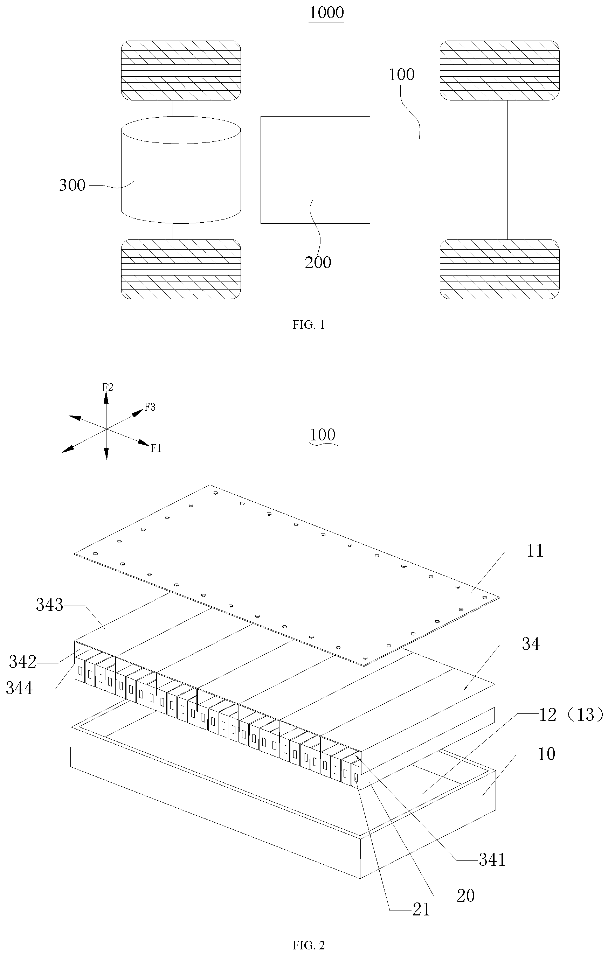

As an example, referring to FIG. 2, the upper cover 11 and the case 10 are snap-fitted together to form a closed space inside the case 10 for accommodating the unit group 30. Here, "closed" means being covered or closed, or may mean being sealed or non-sealed.

As an example, the case 10 may include a frame and a bottom plate. The bottom plate is connected to the frame, and the upper cover 11 covers the case 10 to form a closed space inside the case 10 for accommodating the unit group 30.

In some embodiments, the case 10 may serve as part of a chassis structure of a vehicle 1000. For example, a portion of the case 10 may form at least part of a floor of the vehicle 1000; or a portion of the case 10 may form at least part of each of a crossbeam and a longitudinal beam of the vehicle 1000.

The technical solutions described in the embodiments of this application are applicable to various electric apparatuses using the battery apparatus 100, such as mobile phones, portable devices, notebook computers, electric bicycles, electric toys, electric tools, vehicles 1000, ships, and spacecraft, where spacecraft include airplanes, rockets, space shuttles, and spaceships.

For ease of explanation, an electric apparatus according to one embodiment of this application being a vehicle 1000 is used as an example to describe the following embodiments.

Referring to FIG. 1, FIG. 1 is a schematic structural diagram of a vehicle 1000 according to some embodiments of this application. The vehicle 1000 may be a fuel vehicle, a gas vehicle, or a new energy vehicle, where the new energy vehicle may be a battery electric vehicle, a hybrid electric vehicle, or an extended-range vehicle. A battery apparatus 100 is disposed inside the vehicle 1000, and the battery apparatus 100 may be located at the bottom, front, or rear of the vehicle 1000. The battery apparatus 100 may be configured to supply power to the vehicle 1000, for example, the battery apparatus 100 may serve as an operational power source for the vehicle 1000. The vehicle 1000 may further include a controller 200 and a motor 300, where the controller 200 is configured to control the battery apparatus 100 to supply power to the motor 300, for example, to satisfy power needs of start, navigation, and driving of the vehicle 1000.

In some embodiments of this application, the battery apparatus 100 may not only serve as an operational power source for the vehicle 1000 but also as a driving power source for the vehicle 1000, replacing or partially replacing fuel or natural gas to provide driving power for the vehicle 1000.

In the battery apparatus 100, there may be one or more unit groups 30. In one unit group 30, there may be one or more housings 34. In one housing 34, there may be one or more pouch battery cells 20, and multiple pouch battery cells 20 may be connected in series, parallel, or series-parallel, where being connected in series-parallel refers to multiple pouch battery cells 20 being connected both in series and in parallel. Multiple pouch battery cells 20 may be directly connected in series, parallel, or series-parallel, and an entirety formed by the multiple pouch battery cells 20 is accommodated in the housing 34; multiple pouch battery cells 20 in multiple housings 34 are then connected in series, parallel, or series-parallel to form an entirety; multiple unit groups 30 may be connected in series, parallel, or series-parallel to form an entirety which is accommodated in the case 10, where an upper cover 11 covers the case 10. The battery apparatus 100 may further include other structures. For example, the battery apparatus 100 may further include a busbar component for achieving electrical connections between multiple pouch battery cells 20.

In the embodiments of this application, the pouch battery cell 20 may be a secondary battery, where the secondary battery refers to a battery that can be recharged to activate an active material for continued use after the pouch battery cell 20 is discharged.

The pouch battery cell 20 may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickelcadmium battery, a lead-acid battery, or the like, which is not limited in the embodiments of this application.

According to some embodiments of this application, referring to FIG. 2 and FIG. 3, an embodiment of this application provides a battery apparatus 100. The battery apparatus 100 includes a battery cell unit 31 and a limiting member 32. The battery cell unit 31 includes a housing 34 and a pouch battery cell 20. The housing 34 is internally provided with an accommodating cavity 341, and the pouch battery cell 20 is disposed in the accommodating cavity 341. The housing 34 includes two first walls 342 arranged oppositely along a first direction F1 and a second wall 343 located between the two first walls 342, where the second wall 343 is located at one end of the housing 34 along a second direction F2 and connected to the two first walls 342. The housing 34 has a first opening 344 formed at another end along the second direction F2. The second direction F2 is perpendicular to the first direction F1. Multiple battery cell units 31 are arranged along the first direction F1 to form a unit group 30. The limiting member 32 is located on a side of the second walls 343 of at least some battery cell units 31 in the unit group 30 facing away from the first opening 344, and the limiting member 32 is configured to provide a constraining force along the first direction to the battery cell units 31.

Optionally, in one embodiment, the second wall 343 may be connected to the two first walls 342 through welding or a snap-fit structure. Optionally, in one embodiment, the second wall 343 and the two first walls 342 may be integrally formed.

The pouch battery cell 20 may be accommodated in the accommodating cavity 341 of the housing 34 through the first opening 344 of the housing 34, thereby forming the battery cell unit 31.

Optionally, the battery apparatus 100 may include one unit group 30 or multiple unit groups 30. Optionally, when the battery apparatus 100 includes multiple unit groups 30, the multiple unit groups 30 may be arranged along the first direction. A third direction is perpendicular to both the first direction and the second direction.

The limiting member 32 can limit the relative positions between multiple housings 34 to provide a constraining force along the first direction F1 to the battery cell units 31. When the pouch battery cells 20 swell, the multiple battery cell units 31 can be tightened under the action of the limiting member 32, thereby limiting mutual displacement of the multiple battery cell units 31.

Optionally, the battery apparatus 100 may include one unit group 30 and one limiting member 32. For example, in some embodiments, one unit group 30 includes multiple battery cell units 31 arranged along the first direction F1, and the limiting member 32 is located on a side of the second wall 343 of each of all battery cell units 31 facing away from the first opening 344, providing a constraining force along the first direction F1 to all battery cell units 31.

Optionally, the battery apparatus 100 may include multiple unit groups 30 and one limiting member 32. For example, in some embodiments, the battery apparatus 100 may include two unit groups 30 arranged along the first direction F1 and one limiting member 32, where the limiting member 32 may be located on a side of the second wall 343 of each of all battery cell units 31 of the two unit groups 30 facing away from the first opening 344, providing a constraining force along the first direction F1 to all battery cell units 31 in the two unit groups 30.

Optionally, the battery apparatus may include one unit group 30 and multiple limiting members 32. For example, in some embodiments, the battery apparatus 100 may include one unit group 30 and multiple limiting members 32, where the multiple limiting members 32 may collectively be located on a side of the second walls 343 of at least some battery cell units 31 of the one unit group 30 facing away from the first opening 344, providing a constraining force along the first direction F1 to the at least some battery cell units 31 in the unit group 30.

Optionally, the battery apparatus 100 may include multiple unit groups 30 and multiple limiting members 32. For example, in some embodiments, the battery apparatus 100 may include two unit groups 30 and two limiting members 32, where each unit group 30 may include multiple battery cell units 31 arranged along the first direction F1, each unit group 30 may be provided with one limiting member 32, and the limiting member 32 is located on a side of the second wall 343 of each of all battery cell units 31 in the one unit group 30 facing away from the first opening 344, providing a constraining force along the first direction F1 to all battery cell units 31. As another example, in some embodiments, the battery apparatus 100 may include three unit groups 30 and six limiting members 32, where each unit group 30 may be provided with two limiting members 32, and the two limiting members 32 may both be located on a side of the second wall 343 of each of all battery cell units 31 in the same unit group 30 facing away from the first opening 344. As another example, in some embodiments, the battery apparatus 100 may include three unit groups 30 and six limiting members 32, where each unit group 30 may be provided with two limiting members 32, and the two limiting members 32 may be located on a side of the second wall 343 of each of some battery cell units 31 in the same unit group 30 facing away from the second opening 344, providing a constraining force along the first direction F1 to some battery cell units 31.

The limiting member 32 is configured to provide a constraining force along the first direction F1 to the battery cell units 31, reducing the risk of displacement of the battery cell units 31 in the first direction F1 to some extent, thereby reducing failure and safety risks of the pouch battery cells 20.

According to some embodiments of this application, optionally, referring to FIG. 3, the battery apparatus 100 further includes a first structural member 40 and a second structural member 50, where the first structural member 40 and the second structural member 50 are respectively located at two ends of the unit group 30 along the first direction F1, and the limiting member 32 is connected to the first structural member 40 and the second structural member 50.

The unit group 30 includes multiple battery cell units 31 arranged along the first direction F1 and tightly abutting against each other, where the battery cell units 31 at the two ends of the unit group 30 along the first direction F1 are respectively a first battery cell unit and a second battery cell unit. The first structural member 40 and the second structural member 50 are respectively located at the two ends of the unit group 30 along the first direction F1, and the first structural member 40 and the second structural member 50 are respectively connected to or tightly abut against the first battery cell unit and the second battery cell unit.

In some embodiments, the first structural member 40 is located on a side of the first battery cell unit along the first direction F1 facing away from the second battery cell unit, and the second structural member 50 is located on a side of the second battery cell unit along the first direction F1 facing away from the first battery cell unit. The first structural member 40 and the second structural member 50 are respectively connected to or tightly abut against the first battery cell unit and the second battery cell unit, that is, the first structural member 40 and the second structural member 50 are respectively connected to or tightly abut against the first walls 342 of the first battery cell unit and the second battery cell unit. The limiting member 32 is connected to the first structural member 40 and the second structural member 50. The limiting member 32 can limit a relative position between the first structural member 40 and the second structural member 50 in the first direction F1, thereby limiting a relative position between the first battery cell unit and the second battery cell unit in the first direction F1. Since the unit group 30 includes multiple battery cell units 31 arranged along the first direction F1 and tightly abutting against each other, at least one battery cell unit 31 is clamped between the first battery cell unit and the second battery cell unit.

It can be understood that when the limiting member 32 limits the relative position between the first battery cell unit and the second battery cell unit in the first direction F1, the limiting member 32 also limits relative positions between all battery cell units 31 of the unit group 30 in the first direction F1.

The first structural member 40 and the second structural member 50 are respectively located at the two ends of the unit group 30 along the first direction F1, and the limiting member 32 is connected to the first structural member 40 and the second structural member 50. The limiting member 32 can limit the relative position between the first structural member 40 and the second structural member 50 in the first direction F1, thereby limiting relative positions between multiple battery cell units 31 of the unit group 30 in the first direction F1, improving the capability of limiting displacement of the battery cell units 31 in the first direction F1 to some extent, and reducing failure and safety risks of the pouch battery cells 20.

According to some embodiments of this application, optionally, referring to FIG. 3, the first structural member 40 and the second structural member 50 are respectively a first beam and a second beam disposed at the two ends of the unit group 30 along the first direction F1.

The first beam and the second beam are elongated load-bearing members. Optionally, length directions of the first beam and the second beam are along the third direction F3, and the lengths of the first beam and the second beam are the same, which are the same as the dimension of the housing 34 along the third direction F3, so that the first beam and the second beam can be better connected to the housing 34 and limit the housing 34. The first beam and the second beam are respectively disposed at the two ends of the unit group 30 along the first direction F1. The third direction F3 is perpendicular to both the first direction F1 and the second direction F2.

The first structural member 40 and the second structural member 50 are respectively a first beam and a second beam at the two ends of the unit group 30 along the first direction F1. The first beam and the second beam can form a longer contact region with the unit group 30, thereby improving the capability of limiting multiple battery cell units 31.

In some embodiments, the first beam is located on a side of the first battery cell unit along the first direction F1 facing away from the second battery cell unit, and the second beam is located on a side of the second battery cell unit along the first direction F1 facing away from the first battery cell unit. The first beam and the second beam are respectively connected to or tightly abut against the first battery cell unit and the second battery cell unit. The limiting member 32 is connected to the first beam and the second beam. The limiting member 32 can limit a relative position between the first beam and the second beam in the first direction F1, thereby limiting the relative position between the first battery cell unit and the second battery cell unit in the first direction F1. Since the unit group 30 includes multiple battery cell units 31 arranged along the first direction F1 and tightly abutting against each other, the battery cell units 31 between the first battery cell unit and the second battery cell unit are clamped between the first battery cell unit and the second battery cell unit.

It can be understood that when the limiting member 32 limits the relative position between the first battery cell unit and the second battery cell unit in the first direction F1, the limiting member 32 also limits relative positions between all battery cell units 31 of the unit group 30 in the first direction F1.

In some embodiments, the first beam is located on a side of the first battery cell unit along the second direction F2 facing away from the first opening 344, and the second beam is located on a side of the second battery cell unit along the second direction F2 facing away from the first opening 344. The first beam and the second beam are respectively connected to the first battery cell unit and the second battery cell unit. The limiting member 32 is connected to the first beam and the second beam. The limiting member 32 can limit the relative position between the first beam and the second beam in the first direction F1, thereby limiting the relative position between the first battery cell unit and the second battery cell unit in the first direction F1. Since the unit group 30 includes multiple battery cell units 31 arranged along the first direction F1 and tightly abutting against each other, the battery cell units 31 between the first battery cell unit and the second battery cell unit are clamped between the first battery cell unit and the second battery cell unit.

It can be understood that when the limiting member 32 limits the relative position between the first battery cell unit and the second battery cell unit in the first direction F1, the limiting member 32 also limits relative positions between all battery cell units 31 of the unit group 30 in the first direction F1.

The first structural member 40 and the second structural member 50 are respectively a first beam and a second beam at the two ends of the unit group 30 along the first direction F1, and the limiting member 32 can be connected to the first beam and the second beam. The limiting member 32 can limit a relative position between the first beam and the second beam in the first direction F1, thereby limiting relative positions between multiple battery cell units 31 of the unit group 30 in the first direction F1, reducing or preventing displacement of the battery cell units 31 in the first direction F1 to some extent, and reducing failure and safety risks of the pouch battery cells 20.

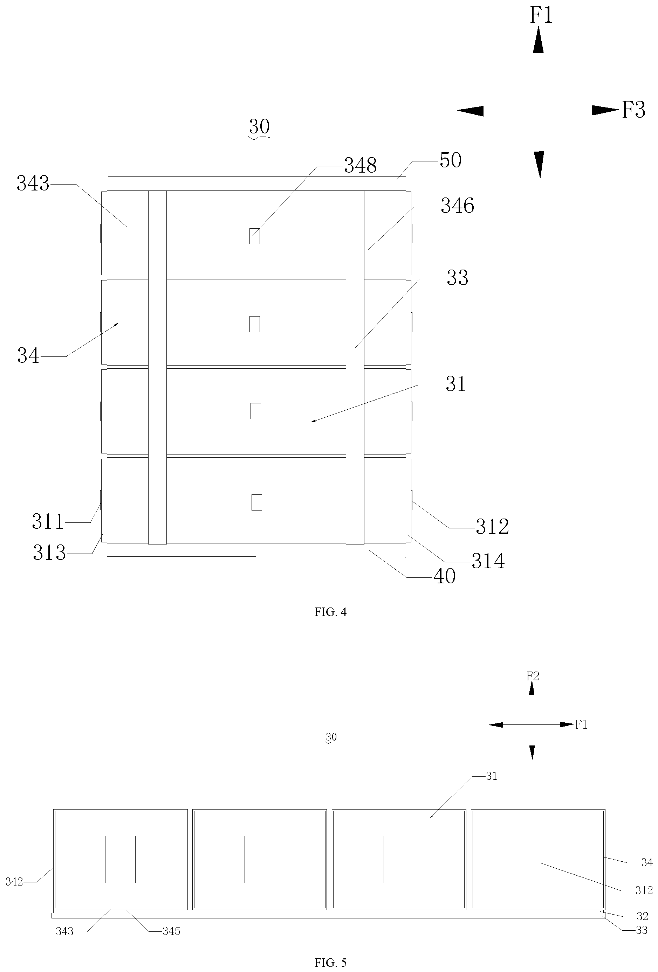

According to some embodiments of this application, optionally, referring to FIG. 4, the limiting member 32 is connected to the second walls 343 of at least some battery cell units 31 in the unit group 30.

The limiting member 32 is connected to the second walls 343 of the at least some battery cell units 31 in the unit group 30, that is, relative positions between at least some housings 34 in the first direction F1 are limited, thereby limiting the relative positions between the at least some battery cell units 31 in the first direction F1.

Optionally, in some embodiments, one limiting member 32 may be connected to the second wall 343 of each of the housing 34 of all battery cell units 31 in the unit group 30. In some embodiments, multiple limiting members 32 are respectively connected one-to-one to the second wall 343 of each of the housings 34 of all battery cell units 31 in the unit group 30. Optionally, a surface of the limiting member 32 facing the battery cell unit 31 along the second direction F2 is connected to a surface of the second wall 343 of the housing 34 facing away from the first wall 342. Optionally, multiple connecting portions may protrude from the surface of the limiting member 32 facing the battery cell unit 31 along the second direction F2. The multiple connecting portions may be respectively connected to surfaces of the second walls 343 of multiple battery cell units 31 facing away from the first wall 342.

The limiting member 32 may be connected to some adjacent battery cell units 31 in the unit group 30. In some embodiments, one limiting member 32 is connected to the second wall 343 of each of the housings 34 of two or more adjacent battery cell units 31 in the unit group 30. Optionally, a surface of the limiting member 32 facing the battery cell unit 31 along the second direction F2 is connected to a surface of the second wall 343 of the housing 34 facing away from the first wall 342. Optionally, multiple connecting portions may protrude from the surface of the limiting member 32 facing the battery cell unit 31 along the second direction F2. The multiple connecting portions may be respectively connected to surfaces of the second walls 343 of multiple battery cell units 31 facing away from the first wall 342.

The limiting member 32 may be connected to some non-adjacent battery cell units 31 in the unit group 30. In some embodiments, the unit group 30 includes multiple battery cell units 31 arranged along the first direction F1 and tightly abutting against each other. One limiting member 32 is connected to the second wall 343 of each of the housings 34 of some non-adjacent battery cell units 31 in the unit group 30. Optionally, a surface of the limiting member 32 facing the battery cell unit 31 along the second direction F2 is connected to a surface of the second wall 343 of the housing 34 facing away from the first wall 342. Optionally, multiple connecting portions may protrude from the surface of the limiting member 32 facing the battery cell unit 31 along the second direction F2. The multiple connecting portions may be respectively connected to surfaces of the second walls 343 of multiple battery cell units 31 facing away from the first wall 342.

The limiting member 32 is connected to the second walls 343 of at least some battery cell units 31 in the unit group 30, limiting relative positions between at least some housings 34 in the first direction F1, further limiting relative positions between the battery cell units 31 connected thereto in the first direction F1, thereby reducing or preventing displacement of the battery cell units 31 in the first direction F1 to some extent, and reducing failure and safety risks of the pouch battery cells 20.

According to some embodiments of this application, optionally, referring to FIG. 4, the limiting member 32 is connected to the at least some battery cell units 31 through an adhesive.

The limiting member 32 is connected to the at least some battery cell units 31 through the adhesive, that is, the limiting member 32 is connected to the at least some battery cell units 31 through an adhesive bonding manner.

In some embodiments, an adhesive is applied between connection portions of the surface of the limiting member 32 facing the battery cell unit 31 along the second direction F2 and the surface of the second wall 343 of the housing 34 facing away from the first wall 342; and the adhesive can fixedly connect the limiting member 32 to the at least some battery cell units 31, thereby limiting displacement of the battery cell units 31 in the first direction F1.

In some embodiments, the limiting member 32 is provided with multiple connecting portions, where the multiple connecting portions protrude from the surface of the limiting member 32 facing the battery cell unit 31 along the second direction F2. An adhesive is applied between connection portions of the connecting portions and the surface of the second wall 343 of the battery cell unit 31 facing away from the first wall 342, and the adhesive can fixedly connect the limiting member 32 to the battery cell unit 31, thereby limiting displacement of the battery cell unit 31 in the first direction F1.

Optionally, in one embodiment, the limiting member 32 and the adhesive are insulating.

The limiting member 32 is connected to the at least some battery cell units 31 through the adhesive, reducing displacement of the battery cell units 31 in the first direction F1 to some extent, and simplifying a mounting process of the battery apparatus 100.

According to some embodiments of this application, optionally, referring to FIG. 4 and FIG. 5, the housing 34 of the battery cell unit 31 is provided with an adhesive region 345, where the limiting member 32 and the battery cell unit 31 are connected to each other through the adhesive in the adhesive region 345, the housing 34 of the battery cell unit 31 is provided with an insulating layer 346, and the insulating layer 346 is provided with a window in the adhesive region 345 to allow the adhesive to connect the limiting member 32 and the housing 34 of the battery cell unit 31 through the window.

The insulating layer 346 refers to a material layer used to prevent current conduction between conductors or conductive materials. The insulating layer 346 is disposed on the housing 34 of the battery cell unit 31. When the insulating layer 346 is disposed on an outer side of the housing 34, the risk of abnormal electrical conduction between adjacent battery cell units 31 or between battery cell units 31 and other metal components can be reduced.

The insulating layer 346 is provided with the window in the adhesive region 345, and the adhesive can bond the limiting member 32 and the housing 34 of the battery unit through the window. The window region of the insulating layer 346 corresponds to the adhesive region 345. Providing the insulating layer 346 can reduce the risk of abnormal electrical conduction of the housing 34 of the battery cell unit 31, and providing the window in the insulating layer 346 in the adhesive region 345 can make the connection between the housing 34 and the limiting member 32 more stable, making it less likely to tear the insulating layer 346 due to a relative position between the limiting member 32 and the housing 34 during vibration.

Optionally, the insulating layer 346 may refer to a material layer formed by an insulating material (such as insulating paint, resin, or coating) applied to an outer surface of the housing 34.

Optionally, the insulating layer 346 may be a material with an insulating function (such as a rubber gasket, an insulating film, or an insulating plate) directly attached to the outer surface of the housing 34.

The insulating layer 346 is provided with the window in the adhesive region 345 to allow the adhesive to connect the limiting member 32 and the housing 34 of the battery cell unit 31 through the window, which is conducive to controlling the application range of the adhesive and preventing the adhesive from spreading beyond the adhesive region 345 to some extent.

According to some embodiments of this application, optionally, referring to FIG. 3, the limiting member 32 is connected to the at least some battery cell units 31 using an insulating adhesive.

The insulating adhesive has both insulating properties and adhesive properties.

In some embodiments, the housing 34 of at least one battery cell unit 31 is provided with the adhesive region 345 and the insulating layer 346. The limiting member 32 is connected to at least one battery cell unit 31 using the insulating adhesive, and the limiting member 32 is connected through the adhesive to the battery cell unit 31 provided with the adhesive region 345 and the insulating layer on the housing 34.

The limiting member 32 is connected to the at least some battery cell units 31 using the insulating adhesive, reducing displacement of the battery cell units 31 in the first direction F1 to some extent, and reducing the risk of abnormal electrical conduction between different battery cell units 31 or between battery cell units 31 and other metal components within a battery.

According to some embodiments of this application, optionally, referring to FIG. 2 to FIG. 6, one battery cell unit 31 includes multiple pouch battery cells 20 accommodated in the housing 34.

In some embodiments, the multiple pouch battery cells 20 may be directly accommodated in the housing 34 in an arrangement manner of tightly abutting against each other.

In some embodiments, a buffer layer may be disposed between the housing 34 and the pouch battery cells 20 and/or between the pouch battery cells 20. The buffer layer can absorb external impacts or vibrations, thereby protecting the pouch battery cells 20, further improving the durability and reliability of the battery apparatus 100.

When the multiple pouch battery cells 20 accommodated in the housing 34 swell, the housing 34 can constrain the swelling amplitude of the pouch battery cells 20 to some extent. In addition, the limiting member 32 can constrain displacement of the battery cell unit 31 caused by the swelling of the pouch battery cells 20. The multiple pouch battery cells 20 accommodated in the housing 34 may be electrically connected in series, parallel, or series-parallel.

One battery cell unit 31 including multiple pouch battery cells 20 accommodated in the housing 34 can increase the energy density of the battery apparatus 100 and overall performance of the battery apparatus 100.

According to some embodiments of this application, optionally, referring to FIG. 2 and FIG. 3, the battery apparatus 100 further includes a case 10, where the case 10 includes an inner bottom wall 12, an end of the first wall 342 of the battery cell unit 31 facing away from the second wall 343 is provided with a first connecting portion 347, and the first connecting portion 347 is connected to the inner bottom wall 12.

The case 10 is a main protective and accommodating structure of the entire battery apparatus 100, which can reduce direct external impacts on the interior of the battery apparatus 100 to some extent. The case 10 is internally provided with the inner bottom wall 12. The inner bottom wall 12 can be used to support the pouch battery cells 20 and provide a stable structural foundation for the battery apparatus 100.

The end of the first wall 342 of the housing 34 of the battery cell unit 31 facing away from the second wall 343 is provided with a first connecting portion 347, and the first connecting portion 347 is connected to the inner bottom wall 12, which can fix the housing 34 within the case 10, limiting a relative position between the housing 34 and the case 10, thereby limiting a relative position between the battery cell unit 31 and the case 10.

It can be understood that at least some battery cell units 31 of the battery apparatus 100 are connected to the inner bottom wall 12 of one case 10 through the first connecting portion 347, and the inner bottom wall 12 of the case 10 can provide constraining forces along the first direction F1, the second direction F2, and the third direction F3 to the at least some battery cell units 31.

The end of the first wall 342 of the battery cell unit 31 facing away from the second wall 343 is provided with the first connecting portion 347, and the first connecting portion 347 is connected to the inner bottom wall 12, further reducing or preventing displacement of the battery cell unit 31 within the case 10, thereby reducing failure and safety risks of the pouch battery cells 20.

According to some embodiments of this application, optionally, referring to FIG. 2, the first connecting portion 347 is connected to the inner bottom wall 12 through a coating adhesive.

The first connecting portion 347 is connected to the inner bottom wall 12 through the coating adhesive, that is, the first connecting portion 347 is connected to the inner bottom wall 12 through a coating adhesive bonding manner.

In some embodiments, an adhesive is applied to a surface of the first connecting portion 347 facing the inner bottom wall 12, and the first connecting portion 347 of the battery cell unit 31 is bonded to a surface of the inner bottom wall 12 facing the battery cell unit 31 through the adhesive.

In some embodiments, an adhesive is applied to a surface of the inner bottom wall 12 facing the battery cell unit 31, and the first connecting portion 347 of the battery cell unit 31 is bonded to the surface of the inner bottom wall 12 facing the battery cell unit 31 through the adhesive, thereby connecting the battery cell unit 31 to the inner bottom wall 12.

The first connecting portion 347 is connected to the inner bottom wall 12 through the coating adhesive, reducing or preventing displacement of the battery cell unit 31 within the case 10 to some extent, and simplifying a mounting process of the battery cell unit 31.

According to some embodiments of this application, optionally, referring to FIG. 2, the first connecting portion 347 is connected to the inner bottom wall 12 through an insulating adhesive.

The insulating adhesive has both insulating properties and adhesive properties.

Optionally, an outer surface of the first connecting portion 347 is coated with an insulating layer 346, and the insulating layer 346 is connected to the inner bottom wall 12 through an adhesive, so that the first connecting portion 347 is connected to the inner bottom wall 12.

The first connecting portion 347 is connected to the inner bottom wall 12 through the insulating adhesive, reducing or preventing displacement of the battery cell unit 31 within the case 10 to some extent, and reducing the risk of abnormal electrical conduction between the housing 34 of the battery cell unit 31 and the inner bottom wall 12 of the case 10.

According to some embodiments of this application, optionally, referring to FIG. 2, the case 10 includes a heat exchange plate 13, where the inner bottom wall 12 is a side surface of the heat exchange plate 13 facing the battery cell unit 31, and the first connecting portion 347 is connected to the inner bottom wall 12 through thermally conductive adhesive.

During the operation of the battery apparatus 100, the pouch battery cell 20 generates heat. The heat from the pouch battery cell 20 can be transferred to the housing 34 and then transferred from the first connecting portion 347 of the housing 34 to the inner bottom wall 12 through the thermally conductive adhesive, that is, the heat is transferred to the heat exchange plate 13, thereby regulating the temperature of the pouch battery cell 20, enabling the pouch battery cell 20 to operate within a normal temperature range.

The heat exchange plate 13 can exchange heat with a heat exchange medium, thereby dissipating the heat absorbed from the pouch battery cell 20 to the outside of the battery apparatus 100, helping to maintain the temperature of the battery apparatus 100 within a safe range and preventing overheating.

In some embodiments, the heat exchange plate 13 may provide channels for the flow of a heat exchange medium, where the heat exchange medium includes but is not limited to water or other liquids. When a low-temperature heat exchange medium flows in the heat exchange plate 13, the heat exchange medium can exchange heat with the heat exchange plate 13, thereby absorbing and taking away the heat from the pouch battery cell 20.

In some embodiments, the heat exchange plate 13 may provide heat to the pouch battery cell 20. Optionally, the heat exchange plate 13 may provide channels for the flow of a high-temperature heat exchange medium, where the high-temperature heat exchange medium includes but is not limited to hot water or other liquids.

The heat exchange plate 13 can quickly dissipate heat generated by the pouch battery cell 20 or provide heat to the pouch battery cell 20, thereby enabling the pouch battery cell 20 to operate within a suitable temperature range, and helping to improve the performance of the battery apparatus 100 and reduce the risk of thermal runaway.

According to some embodiments of this application, optionally, referring to FIG. 2, the inner bottom wall 12 includes a second connecting portion, and the first connecting portion 347 is snap-fitted with the second connecting portion.

The first connecting portion 347 can be connected to the inner bottom wall 12 by being snap-fitted with the second connecting portion, limiting the relative position between the housing 34 and the case 10, thereby limiting the relative position between the battery cell unit 31 and the case 10.

It can be understood that at least some battery cell units 31 of the battery apparatus 100 are connected to the inner bottom wall 12 of the case 10 through the snap-fit of the first connecting portion 347 and the second connecting portion, and the inner bottom wall 12 of the case 10 can provide a constraining force to the at least some battery cell units 31, enabling the battery cell units 31 to be fixed within the case 10.

The inner bottom wall 12 includes a second connecting portion, and the first connecting portion 347 is snap-fitted with the second connecting portion to connect the battery cell unit 31 to the inner bottom wall 12 of the case 10, further reducing or preventing displacement of the battery cell unit 31 within the case 10, thereby reducing failure and safety risks of the pouch battery cells 20.

Optionally, in one embodiment, the first connecting portion 347 is provided with a slot, and one end of the second connecting portion can be at least partially inserted into the slot, enabling the first connecting portion 347 to be snap-fitted with the second connecting portion.

Optionally, in one embodiment, the first connecting portion 347 is provided with a slot, and the second connecting portion is provided with a protrusion, where the protrusion can be at least partially inserted into the slot, enabling the first connecting portion 347 to be snap-fitted with the second connecting portion.

Optionally, in one embodiment, the second connecting portion is provided with a slot, and one end of the first connecting portion 347 can be partially inserted into the slot, enabling the first connecting portion 347 to be snap-fitted with the second connecting portion.

Optionally, in one embodiment, the second connecting portion is provided with a slot, and the first connecting portion 347 is provided with a protrusion, where the protrusion can be at least partially inserted into the slot, enabling the first connecting portion 347 to be snap-fitted with the second connecting portion.

According to some embodiments of this application, optionally, the battery cell unit 31 further includes a positive electrode lead-out portion 311 and a negative electrode lead-out portion 312 located on the second wall 343, where when projected along the second direction F2 toward the second wall 343, a projection of the limiting member 32 is completely offset from a projection of the positive electrode lead-out portion 311 and a projection of the negative electrode lead-out portion 312.

The positive electrode lead-out portion 311 refers to an electrical connection component extending from a positive electrode of the battery cell unit 31. The negative electrode lead-out portion 312 refers to an electrical connection component extending from a negative electrode of the battery cell unit 31. The positive electrode lead-out portion 311 and the negative electrode lead-out portion 312 can be configured to provide a conductive path for current between the battery cell unit 31 and other conductive parts.

In some embodiments, the battery apparatus 100 includes multiple unit groups 30. The positive electrode lead-out portion 311 and the negative electrode lead-out portion 312 are located on the second wall 343 of the housing 34 of the battery cell unit 31, and the multiple unit groups 30 may be arranged along the first direction F1 and/or the third direction F3. The positive electrode lead-out portion 311 and the negative electrode lead-out portion 312 are both located on the second wall 343 and are completely offset from the projection of the limiting member 32 along the second direction F2 toward the second wall 343, allowing the three to share at least part of the space along the second direction F2 outside the second wall 343, and making the internal arrangement of the battery apparatus 100 more orderly and compact.

The positive electrode lead-out portion 311 and the negative electrode lead-out portion 312 are both located on the second wall 343 and are completely offset from the projection of the limiting member 32 along the second direction F2 toward the second wall 343, allowing the three to share at least part of the space along the second direction F2 outside the second wall 343, making the battery arrangement more orderly and compact. Additionally, when projected along the second direction F2 toward the second wall 343, the projection of the limiting member 32 is completely offset from the projection of the positive electrode lead-out portion 311 and the projection of the negative electrode lead-out portion 312, preventing physical contact or interference between the limiting member 32 and the positive electrode lead-out portion 311 or the negative electrode lead-out portion 312, thereby effectively improving the stability of the battery apparatus 100.

According to some embodiments of this application, optionally, referring to FIG. 2, FIG. 4, and FIG. 6, a positive electrode connecting portion 21 and a negative electrode connecting portion 22 of the pouch battery cell 20 are respectively located at two ends of the pouch battery cell 20 along a third direction F3, and the third direction F3 is perpendicular to both the first direction F1 and the second direction F2; and
the battery cell unit 31 further includes a positive electrode busbar 313 and a negative electrode busbar 314, where the positive electrode busbar 313 is connected to the positive electrode connecting portion 21 and the positive electrode lead-out portion 311, and the negative electrode busbar 314 is connected to the negative electrode connecting portion 22 and the negative electrode lead-out portion 312.

The positive electrode connecting portion 21 refers to an electrical connection component extending from a positive electrode of the pouch battery cell 20. The negative electrode connecting portion 22 refers to an electrical connection component extending from a negative electrode of the pouch battery cell 20. The positive electrode connecting portion 21 and the negative electrode connecting portion 22 can be configured to provide a conductive path for current between the pouch battery cell 20 and other conductive parts.

The positive electrode busbar 313 can be configured to aggregate multiple positive electrode electrical connection components into one positive electrode electrical connection component. The negative electrode busbar 314 can be configured to aggregate multiple negative electrode electrical connection components into one negative electrode electrical connection component.

The positive electrode connecting portion 21 of the pouch battery cell 20 may be connected to the positive electrode lead-out portion 311 of the battery cell unit 31 through the positive electrode busbar 313.

The negative electrode connecting portion 22 of the pouch battery cell 20 may be connected to the negative electrode lead-out portion 312 of the battery cell unit 31 through the negative electrode busbar 314.

The positive electrode connecting portion 21 and the negative electrode connecting portion 22 of the pouch battery cell 20 can be disposed at the two ends of the pouch battery cell 20 along the third direction F3 and are led out and connected to the positive electrode connecting portion 21 and the negative electrode connecting portion 22 on the second wall 343 of the battery cell unit 31 using the positive electrode busbar 313 and the negative electrode busbar 314, which is conducive to optimizing the internal space utilization of the battery cell unit 31 and increasing the energy density of the battery cell unit 31.

In some embodiments, four pouch battery cells 20 are accommodated in the housing 34 of one battery cell unit 31, and the positive electrode connecting portions 21 of all pouch battery cells 20 are connected to the positive electrode busbar 313 of the battery cell unit 31, so that the positive electrode connecting portions 21 of the four pouch battery cells 20 may be connected to the positive electrode lead-out portion 311 of the battery cell unit 31.

In some embodiments, four pouch battery cells 20 are accommodated in the housing 34 of one battery cell unit 31, and the negative electrode connecting portions 22 of all pouch battery cells 20 are connected to the negative electrode busbar 314 of the battery cell unit 31, so that the negative electrode connecting portions 22 of the four pouch battery cells 20 may be connected to the negative electrode lead-out portion 312 of the battery cell unit 31.

The positive electrode busbar 313 is connected to the positive electrode connecting portion 21 and the positive electrode lead-out portion 311, and the negative electrode busbar 314 is connected to the negative electrode connecting portion 22 and the negative electrode lead-out portion 312, so that the positive electrode connecting portions 21 and the negative electrode connecting portions 22 of multiple pouch battery cells 20 are aggregated into a unified positive electrode lead-out portion 311 and negative electrode lead-out portion 312, facilitating simplification of an electrical connection structure of the battery apparatus 100.

According to some embodiments of this application, optionally, referring to FIG. 3 and FIG. 4, the battery cell unit 31 includes two end surfaces along a third direction F3, where the third direction F3 is perpendicular to both the first direction F1 and the second direction F2; and
the battery cell unit 31 includes a positive electrode lead-out portion 311 and a negative electrode lead-out portion 312, where the positive electrode lead-out portion 311 and the negative electrode lead-out portion 312 are respectively located on the two end surfaces of the battery cell unit 31 along the third direction F3.

The positive electrode lead-out portion 311 refers to an electrical connection component extending from the positive electrode of the battery cell unit 31. The negative electrode lead-out portion 312 refers to an electrical connection component extending from the negative electrode of the battery cell unit 31. The positive electrode lead-out portion 311 and the negative electrode lead-out portion 312 can be configured to provide a conductive path for current between the battery cell unit 31 and other conductive parts.

In some embodiments, the battery apparatus 100 includes one unit group 30. The positive electrode lead-out portion 311 and the negative electrode lead-out portion 312 are respectively located on the two end surfaces of the battery cell unit 31 along the third direction F3, resulting in a short distance between the positive electrode lead-out portion 311 and the positive electrode connecting portion 21 and a short distance between the negative electrode lead-out portion 312 and the negative electrode connecting portion 22, and allowing for a simpler adapting structure for adapting the positive electrode lead-out portion 311 to the positive electrode connecting portion 21 and a simpler adapting structure for adapting the negative electrode lead-out portion 312 to the negative electrode connecting portion 22.

In some embodiments, the battery apparatus 100 includes multiple unit groups 30. The positive electrode lead-out portion 311 and the negative electrode lead-out portion 312 are respectively located on the two end surfaces of the battery cell unit 31 along the third direction F3, and the multiple unit groups 30 may be arranged along the first direction F1 and/or the third direction F3.

In two adjacent battery cell units 31, two lead-out portions located on the same side end surface along the third direction F3 may be lead-out portions with the same polarity (for example, both are positive electrode lead-out portions 311 or both are negative electrode lead-out portions 312), or lead-out portions with different polarities (for example, one is a positive electrode lead-out portion 311 and the other is a negative electrode lead-out portion 312).

The positive electrode lead-out portion 311 and the negative electrode lead-out portion 312 are respectively located on the two end surfaces of the battery cell unit 31 along the third direction F3, which is conducive to optimizing the spatial layout of the battery apparatus 100, leaving sufficient space for other components or electrical connection components in the second direction F2, and making the overall structure of the battery apparatus 100 more compact and easier to assemble.

According to some embodiments of this application, optionally, referring to FIG. 4, the housing 34 is further provided with a pressure relief structure 348, where the pressure relief structure 348 is located on the second wall 343, and when projected along the second direction F2 toward the second wall 343, a projection of the limiting member 32 is completely offset from a projection of the pressure relief structure 348.

The pressure relief structure 348 refers to an apparatus configuredto release excessive internal pressure of the battery cell unit 31. The pressure relief structure 348 may have various forms, such as a valve, a membrane, a notch, or other forms. When the internal pressure of the battery cell unit 31 reaches a specified threshold, the pressure relief structure 348 can automatically release the pressure, thereby to some extent preventing the housing 34 from rupturing or exploding due to excessive internal pressure of the battery cell unit 31.

When projected along the second direction F2 toward the second wall 343, the projection of the limiting member 32 is completely offset from the projection of the pressure relief structure 348, preventing physical contact or interference between the limiting member 32 and the pressure relief structure 348, and reducing the probability of damage to the structure of the limiting member 32 during actuation of the pressure relief structure 348, thereby effectively improving the stability of the battery apparatus 100.

According to some embodiments of this application, optionally, referring to FIG. 2 and FIG. 3, the battery apparatus 100 includes a case 10, an upper cover 11, and a compressible member 33, where the upper cover 11 covers the case 10, and the compressible member 33 abuts against both the limiting member 32 and the upper cover 11, so that the upper cover 11 presses against the battery cell unit 31 through the compressible member 33.

The upper cover 11 can cover the case 10 to form a relatively closed space, and one or more unit groups 30 can be accommodated in this space.

The compressible member 33 refers to a component that can be deformed by compression under external force and can return to its original shape after the external force is removed, having elastic properties.

The compressible member 33 respectively abuts against both the limiting member 32 and the upper cover 11 to provide a supporting force to the limiting member 32 in the second direction F2. Through force transmission, the supporting force can be provided to the battery cell unit 31 in the second direction F2, thereby buffering external impacts, vibrations, and the like received by the battery cell unit 31.

The compressible member 33 respectively abuts against the limiting member 32 and the upper cover 11, so that the upper cover 11 presses against the battery cell unit 31 through the compressible member 33, keeping the battery cell unit 31 stable when subjected to external forces along the second direction F2, thereby reducing displacement of the battery cell unit 31 in the second direction F2 to some extent.

Optionally, in one embodiment, the compressible member 33 has the same shape and size as the limiting member 32.

According to some embodiments of this application, optionally, referring to FIG. 4, the limiting member 32 is made of a metal material, the housing 34 is made of a metal material, and the limiting member 32 is welded to the housing 34 of the battery cell unit 31.

The limiting member 32 is connected to the housings 34 of at least some battery cell units 31 through welding. When the pouch battery cells 20 swell, the welded portion between the limiting member 32 and the battery cell unit 31 can provide a constraining force along the first direction F1 to the battery cell unit 31, reducing or preventing displacement of the battery cell unit 31 within the case 10 to some extent.

The limiting member 32 is welded to the housing 34 of the battery cell unit 31, allowing the limiting member 32 to provide a greater constraining force to at least some battery cell units 31, further reducing displacement of the battery cell units 31 in the first direction F1, thereby reducing failure and safety risks of the pouch battery cells 20. Additionally, welding is low in cost, quick in process, and easy to implement.

According to some embodiments of this application, an energy storage apparatus 1 is provided, where the energy storage apparatus 1 includes the battery apparatus 100 according to any of the above solutions, where the battery apparatus 100 is configured to store or provide electrical energy.

The energy storage apparatus 1 includes one or more battery clusters (Battery Cluster) to enhance the voltage and capacity of the energy storage apparatus 1. The battery cluster may include multiple battery apparatuses 100, and the multiple battery apparatuses 100 are connected in series through busbar components to increase the voltage of the energy storage apparatus 1. When the energy storage apparatus 1 includes multiple battery clusters, the multiple battery clusters are connected in parallel to increase the capacity of the energy storage apparatus 1. The definition of the battery apparatus 100 is as described above and is not repeated here.

The energy storage apparatus 1 can be used in energy storage power stations, wind power generation systems, solar power generation systems, mobile power systems, or temporary power supply systems. The energy storage apparatus 1 can store electrical energy as needed and output electrical energy at appropriate times. For example, the energy storage apparatus 1 can store electrical energy during off-peak electricity demand periods and provide electrical energy to relevant users or electric devices during peak electricity demand periods. The energy storage system 2000 provided in the embodiments of this application is applicable to any power system requiring the energy storage apparatus 1.

In some embodiments, the energy storage apparatus 1 is an energy storage container or an energy storage cabinet.

In some embodiments, the energy storage apparatus 1 includes a cabinet and one or more battery clusters, where the battery clusters are accommodated in the cabinet.

In some embodiments, the energy storage apparatus 1 may include modules such as a thermal management module, a main control module, a master control module, a power distribution module, and a fire protection module.

As an example, the thermal management module may include a liquid cooling unit, where the liquid cooling unit provides coolant through pipelines to battery apparatuses 100 to regulate the temperature of the pouch battery cells 20.

As an example, the main control module can serve as a battery management unit for the battery cluster to monitor and manage the battery cluster. The main control module can monitor information such as current, voltage, power, or temperature of the battery cluster. For example, the main control module can control the charging and discharging current, voltage, and the like of the battery cluster. The main control module includes modules such as a slave battery management unit SBMU (Slave Battery Management Unit, SBMU) and a fusion switch.

As an example, the master control module can serve as a battery management unit for the energy storage apparatus 1 to monitor and manage the energy storage apparatus 1. The master control module can monitor information such as current, voltage, power, state of charge, or temperature of the energy storage apparatus 1. As an example, the master control module can control the charging and discharging current, voltage, and the like of the energy storage apparatus 1. The master control module includes modules such as an insulation monitoring module IMM (Insulation Monitoring Module, IMM for short), a master battery management unit MBMU (Master Battery Management Unit, MBMU), an Ethernet ETH (EtherNet, ETH), and an optical fiber conversion module.

As an example, the fire protection module includes a control panel, a detector, and an alarm apparatus and is configured to perform detection, alarming, or fire suppression in the energy storage system 2000.

As an example, the power distribution module can be configured to distribute power to the electric modules of the energy storage apparatus 1.

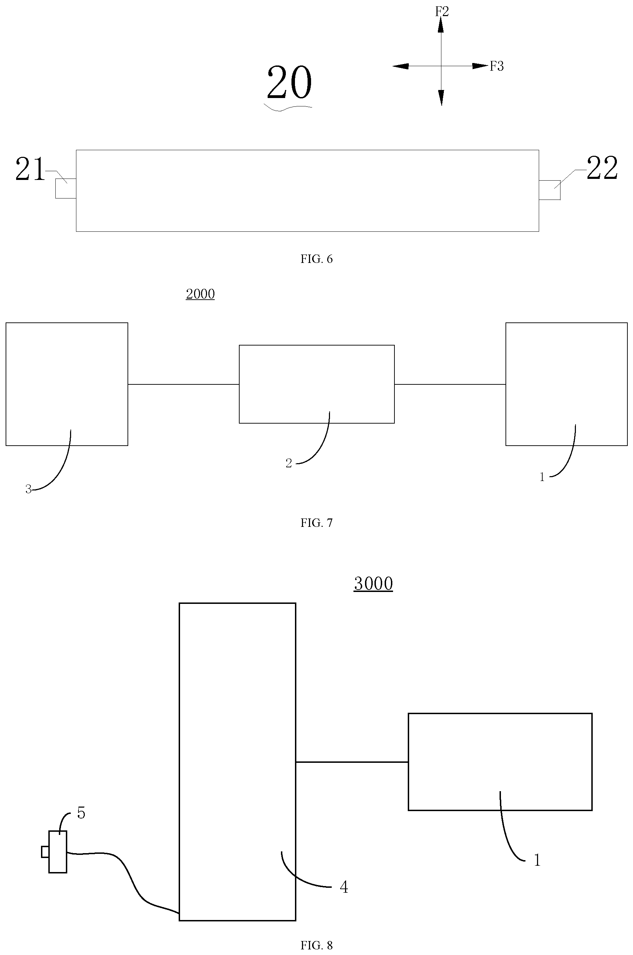

According to some embodiments of this application, referring to FIG. 7, this application further provides an energy storage system 2000, where the energy storage system 2000 includes a power converter system 2 and the energy storage apparatus 1 according to any of the above solutions, where the battery apparatus 100 is configured to store or provide electrical energy.

The energy storage system 2000 includes one or more energy storage apparatuses 1 and a power converter system 2 (Power Converter System, PCS for short), where the power converter system 2 is configured to be connected between a power generation device 3 and the energy storage apparatus 1. The power generation device 3 is configured to generate electrical energy, and the electrical energy generated by the power generation device 3 is stored in the energy storage apparatus 1 through the power converter system 2. As an example, the power generation device 3 may specifically be a solar panel, a hydroelectric power generation device, a thermal power generation device, or a wind power generation device. The specific type of the power generation device 3 is not limited in this application.

According to some embodiments of this application, this application further provides an electric apparatus. The electric apparatus includes the battery apparatus 100, the energy storage apparatus 1, or the energy storage system 2000 according to any one of the above solutions, where the battery apparatus 100 is configured to store or provide electrical energy.

According to some embodiments of this application, referring to FIG. 8, this application further provides a charging network 3000. The charging network 3000 includes a charging pile 4 and the energy storage apparatus 1 or the energy storage system 2000 according to any of the above solutions, where the energy storage apparatus 1 is configured to provide electrical energy to the charging pile 4.

The charging network 3000 may include the charging pile 4 and the energy storage apparatus 1, where the charging pile 4 is electrically connected to the energy storage apparatus 1, and the energy storage apparatus 1 is configured to provide electrical energy to the charging pile 4. The charging pile 4 is electrically connected to the battery apparatus 100 in the energy storage apparatus 1 through cables, and the battery apparatus 100 can provide electrical energy stored in the battery apparatus 100 to the charging pile 4. The charging pile 4 has one or more connectors 5, where the connector 5 is configured to be connected to an electric device (such as a vehicle 1000), thereby supplying energy to the electric device. The definition of the battery apparatus 100 is as described above and is not repeated here.

The energy storage apparatus 1 may be located inside the charging pile 4 (for example, an integrated storage and charging machine) or outside the charging pile 4.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. All such modifications and equivalent replacements shall fall within the scope of the claims and specification of this application. In particular, as long as there is no structural conflict, the technical features mentioned in the various embodiments can be combined in any manner. This application is not limited to the specific embodiments disclosed in this specification but includes all technical solutions falling within the scope of the claims.

## Claims

1. A battery apparatus, **characterized by** comprising:
a battery cell unit, wherein the battery cell unit comprises a housing and a pouch battery cell, the housing is internally provided with an accommodating cavity, the pouch battery cell is disposed in the accommodating cavity, the housing comprises two first walls arranged oppositely along a first direction and a second wall located between the two first walls, the second wall is located at one end of the housing along a second direction and connected to the two first walls, the housing has a first opening formed at another end along the second direction, and the second direction is perpendicular to the first direction; and
a limiting member, wherein multiple battery cell units are arranged along the first direction to form a unit group, the limiting member is located on a side of the second walls of at least some battery cell units in the unit group facing away from the first opening, and the limiting member is configured to provide a constraining force along the first direction to the battery cell units.

2. The battery apparatus according to claim 1, **characterized in that** the battery apparatus further comprises a first structural member and a second structural member, wherein the first structural member and the second structural member are respectively located at two ends of the unit group along the first direction, and the limiting member is connected to the first structural member and the second structural member.

3. The battery apparatus according to claim 2, **characterized in that** the first structural member and the second structural member are respectively a first beam and a second beam disposed at the two ends of the unit group along the first direction.

4. The battery apparatus according to claim 1, **characterized in that** the limiting member is connected to the second walls of the at least some battery cell units in the unit group.

5. The battery apparatus according to claim 4, **characterized in that** the limiting member is connected to the at least some battery cell units through an adhesive.

6. The battery apparatus according to claim 5, **characterized in that** the housing of the battery cell unit is provided with an adhesive region, wherein the limiting member and the battery cell unit are connected to each other through the adhesive in the adhesive region, the housing of the battery cell unit is provided with an insulating layer, and the insulating layer is provided with a window in the adhesive region to allow the adhesive to connect the limiting member and the housing of the battery cell unit through the window.

7. The battery apparatus according to claim 5, **characterized in that** the limiting member is connected to the at least some battery cell units using an insulating adhesive.

8. The battery apparatus according to claim 1, **characterized in that** one battery cell unit comprises multiple pouch battery cells accommodated in the housing.

9. The battery apparatus according to claim 1, **characterized in that** the battery apparatus further comprises a case, wherein the case comprises an inner bottom wall, an end of the first wall of the battery cell unit facing away from the second wall is provided with a first connecting portion, and the first connecting portion is connected to the inner bottom wall.

10. The battery apparatus according to claim 9, **characterized in that** the first connecting portion is connected to the inner bottom wall through a coating adhesive.

11. The battery apparatus according to claim 10, **characterized in that** the first connecting portion is connected to the inner bottom wall through an insulating adhesive.

12. The battery apparatus according to claim 10, **characterized in that** the case comprises a heat exchange plate, wherein the inner bottom wall is a side surface of the heat exchange plate facing the battery cell unit, and the first connecting portion is connected to the inner bottom wall through a thermally conductive adhesive.

13. The battery apparatus according to any one of claims 9 to 12, **characterized in that** the inner bottom wall comprises a second connecting portion, and the first connecting portion is snap-fitted with the second connecting portion.

14. The battery apparatus according to claim 1, **characterized in that** the battery cell unit further comprises a positive electrode lead-out portion and a negative electrode lead-out portion located on the second wall, wherein when projected along the second direction toward the second wall, a projection of the limiting member is completely offset from a projection of the positive electrode lead-out portion and a projection of the negative electrode lead-out portion.

15. The battery apparatus according to claim 14, **characterized in that** a positive electrode connecting portion and the negative electrode connecting portion of the pouch battery cell are respectively located at two ends of the pouch battery cell along a third direction, and the third direction is perpendicular to both the first direction and the second direction; and
the battery cell unit further comprises a positive electrode busbar and a negative electrode busbar, wherein the positive electrode busbar is connected to the positive electrode connecting portion and the positive electrode lead-out portion, and the negative electrode busbar is connected to the negative electrode connecting portion and the negative electrode lead-out portion.

16. The battery apparatus according to claim 1, **characterized in that** the battery cell unit comprises two end surfaces along a third direction, and the third direction is perpendicular to both the first direction and the second direction; and
the battery cell unit comprises a positive electrode lead-out portion and a negative electrode lead-out portion, wherein the positive electrode lead-out portion and the negative electrode lead-out portion are respectively located on the two end surfaces of the battery cell unit along the third direction.

17. The battery apparatus according to claim 1, **characterized in that** the housing is further provided with a pressure relief structure, wherein the pressure relief structure is located on the second wall, and when projected along the second direction toward the second wall, a projection of the limiting member is completely offset from a projection of the pressure relief structure.

18. The battery apparatus according to claim 1, **characterized in that** the battery apparatus comprises a case, an upper cover, and a compressible member, wherein the upper cover covers the case, and the compressible member abuts against both the limiting member and the upper cover, so that the upper cover presses against the battery cell unit through the compressible member.

19. The battery apparatus according to claim 1, **characterized in that** the limiting member is made of a metal material, the housing is made of a metal material, and the limiting member is welded to the housing of the battery cell unit.

20. An energy storage apparatus, **characterized by** comprising multiple battery apparatuses according to any one of claims 1 to 19, wherein the battery apparatus is configured to store or provide electrical energy.

21. An energy storage system, **characterized by** comprising a power converter system and the energy storage apparatus according to claim 20, wherein the power converter system is configured to be electrically connected to a power generation apparatus and the energy storage apparatus.

22. An electric apparatus, **characterized by** comprising the battery apparatus according to any one of claims 1 to 19, the energy storage apparatus according to claim 20, or the energy storage system according to claim 21, wherein the battery apparatus is configured to store or provide electrical energy.

23. A charging network, **characterized by** comprising a charging pile and the energy storage apparatus according to claim 20 or the energy storage system according to claim 21, wherein the energy storage apparatus is configured to provide electrical energy to the charging pile.
